(19) **Europäisches Patentamt European Patent Office Office européen des brevets**

(11) **EP 1 511 264 B1**

(12) **EUROPEAN PATENT SPECIFICATION**

(45) Date of publication and mention
of the grant of the patent:
**31.03.2010 Bulletin 2010/13**

(51) Int Cl.:
**H04L 27/36** *(2006.01)*

(21) Application number: **04019674.3**

(22) Date of filing: **19.08.2004**

(54) **Adaptive imbalance correction based on amplitude distribution**

Adaptive Ungleichgewichtskorrektur basierend auf Amplitudenverteilung

Correction adaptative du déséquilibre sur la base de la distribution d'amplitude

(84) Designated Contracting States:
**AT BE BG CH CY CZ DE DK EE ES FI FR GB GR HU IE IT LI LU MC NL PL PT RO SE SI SK TR**

(30) Priority: **20.08.2003 NO 20033695**

(43) Date of publication of application:
**02.03.2005 Bulletin 2005/09**

(73) Proprietor: **Nera Networks As**
**5257 Kokstad (NO)**

(72) Inventors:
• **Lund, Sigurd André**
**5259 Hjellestad (NO)**
• **Gjertsen, Karl Martin**
**5244 Fana (NO)**
• **Onarheim, Kjetil**
**5143 Fyllingsdalen (NO)**

(74) Representative: **Wesmann, Johan Fredrik et al**
**Zacco Norway AS**
**Patent Department**
**Haakon VII's gt. 2**
**P.O. Box 2003 Vika**
**0125 Oslo (NO)**

(56) References cited:
**EP-A- 0 324 581     EP-A- 0 617 532**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## 1. BACKGROUND OF THE INVENTION

### 1.1 Field of the Invention

The invention relates to a method for measuring and optimising critical parameters of a modulator in a communication system which utilise multilevel constellations e.g. QAM. The adjustment is performed during normal operation of the system.

### 1.2 Description of Background

In the field of digital communication, a common technique is to modulate a carrier with in-phase (I) and quadrature-phase (Q) data. Even though completely digital solutions exist, their practical use is often limited by the fact that a high sampling rate is required to generate a reasonably high carrier frequency. It is therefore still preferable for many applications, such as e.g. direct modulation on the transmission frequency, to perform this operation by means of a conventional modulator (mixer) operating in the analogue domain.

In the analog process mentioned above, some deficiencies, not found in its digital counterpart, are typical. The invention focuses on correction of the three principal impairments of quadrature modulators:

(i) Carrier wave leakage at the output of the modulator. Applying a variable DC source at the baseband input of the modulator can compensate for this.
(ii) Differences in I- and Q-channel gain from DAC through modulator will cause mismatch between I- and Q signal levels. Scaling the baseband I and Q can align the level of the two components.
(iii) The 0°/90° phase alignment of I and Q in the analogue modulator will not be precise, and imbalance will cause a loss of orthogonality between the I- and Q axis. This can be mitigated by cross-leakage between the baseband I and Q components

In all cases disturbance of the reception can occur in more or less degree, depending on the structure of the demodulator.

One aspect of the problem is the individual differences from unit to unit. This can be handled by an individual tuning procedure. More serious, however, is drift of the impairments caused by a shift in temperature, LO (carrier) frequency or ageing while the equipment is in normal service. In order to handle this, an adaptive mechanism is required.

Of the three listed impairments, (i) is the most crucial to handle in a transmitter, as this more readily may cause a conflict with the regulatory spectrum mask requirements than (ii) and (iii).

The aforementioned problems have been known for some time, and various techniques exist for adjusting and minimising such deficiencies.

EP0617532 to Nokia Corporation teaches a vector modulation system and a radio telephone comprising the vector modulation system adapted to correct or compensate amplitude and phase differences in a modulated data signal generated by a quadrature modulator, by measuring narrow band envelope powers at first and second selected frequencies of the signal, and generating a compensation or correction signal based on a comparison of the measured narrow band envelope powers at the first and second selected frequencies.

## 2. BRIEF DESCRIPTION OF THE DRAWINGS

Four drawings are included to support the understanding of the invention.

**Fig. 1** is a functional block diagram of a modulator comprising a compensation of imperfections according to the invention.

**Fig. 2** is a flow diagram describing a possible adaptive process for adjustment of the imbalance compensation.

**Fig. 3** shows a 128 QAM cross constellation and the influence of a DC offset due to an LO leakage component.

**Fig. 4** shows the amplitude distribution change due to an LO leakage component.

## 3.1 BRIEF DESCRIPTION OF THE INVENTION

The present invention provides a method for optimizing the performance of a modulator device, the features of which method are recited in the accompanying independent patent claim 1.

Further advantageous features of the method of the present invention for optimizing the performance of a modulator device are recited in the accompanying dependent patent claim 2.

The present invention provides an apparatus for optimizing the performance of a modulator device, the features of which apparatus are recited in the accompanying independent patent claim 3.

Further advantageous features of the apparatus of the present invention for optimizing the performance of a modulator device are recited in the accompanying dependent patent claim 4.

## 3. 2 DETAILED DESCRIPTION OF THE INVENTION

The present invention provides a solution that includes a simple digital implementation that does not have specific requirements for high-speed AD/DA (analog-to-digital/digital-to-analog) devices or critical timing, which otherwise would represent a problem in conventional techniques utilising correlation methods.

Furthermore, the present invention provides a method and an arrangement that exhibit the features recited in the accompanying patent claims.

### Understanding LO leakage

Assume that a modulated signal is provided in the form

$$\text{Equation 1} \qquad s(t) = e^{j\omega t} \cdot r(t) \cdot e^{j\varphi(t)}$$

where $\omega$ is the frequency of the carrier, r(t) is the amplitude and $\varphi$(t) the phase of the modulating signal

This expression basically shows how amplitude and phase are modulated onto the carrier.

If part of the constant frequency signal $\omega$ is added to the signal, the resultant output is

$$\text{Equation 2} \qquad f(t) = e^{j\omega t} \cdot \left[ \lambda + r(t) \cdot e^{j\varphi(t)} \right]$$

where the complex number X defines the LO leakage.

Here it can be seen that the amplitude and phase modulation become distorted, and the task is to find some significant effect of that distortion.

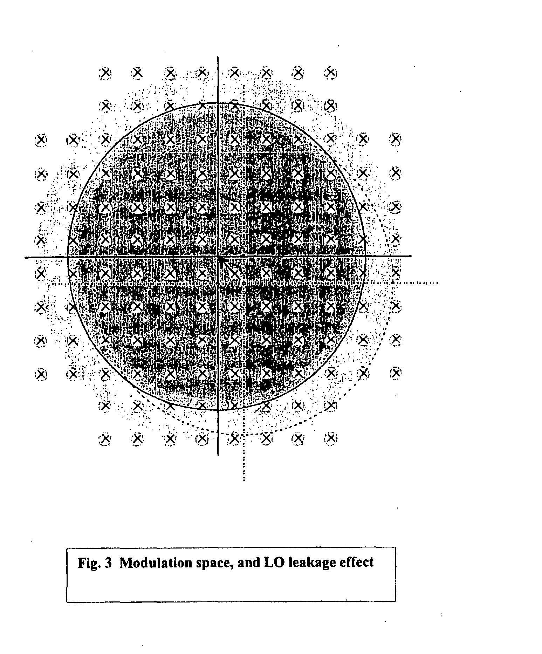

Seeing from equation 2 that the output signal effectively moves the whole modulation pattern in modulation space, we have made the illustration in Fig. 3. A 128 cross constellation ( as constituted by a twelve by twelve matrix with four elements omitted at each of the outer corners) is shown, with the grayscale shaded areas conceptually indicating the probability density for the vector to be in a given position in the modulation space at a selected point in time, denoted by "t". For convenience, the reference system is drawn in solid lines.

If an LO leakage is present, in the illustration used herein, that will correspond to moving the reference system in the modulation space, such as the shift illustrated by the dotted lines. Asking for the probability density of having any given signal amplitude in this case, one has to investigate the probability density around a circularly shaped path, such as the dotted examplary circle shown in fig. 3.

From this, one can easily see that if areas where the probability density in the modulation space is not constant is traversed, one will experience changes in the probability density for arriving at a particular amplitude. When focusing on the information that is conveyed by the amplitude of the signal, one must bear in mind that if a vector observation is to be made at the actual, and typically very high, transmission frequency, that would involve the use of complicated and costly hardware.

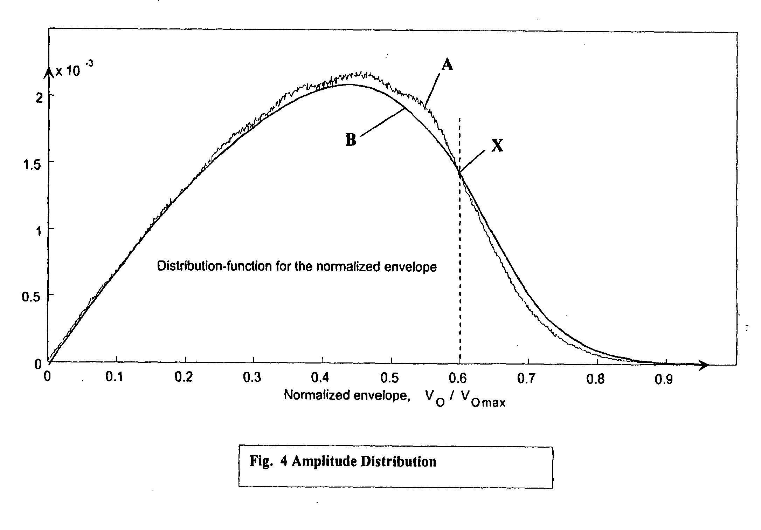

From Fig. 4, we first observe that the constellation has an angular structure, implying that the circular indications of probability density used to illustrate are not giving an exact and correct picture of the situation. However, the inventors have found that a first-order estimate of distortions can be based on a rotational invariant probability distribution in modulation space, as represented by the gray shaded areas in figure 3. Furthermore, it should be noted that altough the illustration given in figure 3 with different shades of gray for different probability density values indicate a stepwise variation, the variation typically is smooth and continuous. Thus, the stepped appearance generally is due to a resolution limitation of the tool used to generate the graphical illustration.

The inventors have performed simulations to show the relative frequency of the different amplitudes occuring in the modulation space, by computing integration of the density for a large number of amplitudes for to different conditions of impairments, with results as shown in Fig. 4. The curve diagrams generally indicate that the probability density of having a particular amplitude occuring increases almost linearly over a significant amplitude range. Since the amplitude frequency ( i.e. the rate at which a particular amplitude occurs) may be interpreted as the result of performing an integration of the probability density for a particular phase and amplitude in the modulation space, around the circle defined by the amplitude, the shades of gray that are shown in figure 3 has support to be understood as a "colour picture" wherein a particular color is indicative of a corresponding probability density. Thus, as an example, and with reference to figure 3, for small amplitudes, all points in constellation space appear to have about the same probability density, leading again to the almost linear shape of the curve (fig. 4) for smaller amplitues. In figure 3, an example of a circle for integration at one particular amplitude in a case with no significant LO leakage is indicated by a circle drawn in solid, while a circle for integration at a corresponding amplitude in a case with some LO leakage is indicated by a circle drawn in a broken line. With other impairments, such as e.g. I/Q orthogonality error or I/Q gain difference, the distribution indicated in fig 3 could be further distorted into e.g. an elliptic shape, which again by comptuing the integration around circles for various amplitudes would lead to a differently shaped amplitude distribution curve than those already shown in fig. 4.

Referring to figure 4, the effect of this understanding is that if the origin is shifted slightly, like an LO leakage would do, one should not expect to see changes in the lower part of the envelope amplitude distribution curve. However, the inventors have found that at some point along the curve, with LO-leakage present, the resulting "modified" distribution curve B falls below the "original" curve A (i.e. the distribution curve generated from data representing no significant LO leakage), while becoming higher towards the upper end.

Looking at the cumulative difference between the two curves of figure 4, one can easily see that a curve representing the cumulative difference would peak at the point where the modified distribution curve B crosses the "original" curve A. This point of intersection (X) will represent the optimum point for detection.

### Understanding of quadrature error and gain imbalance

As focus in the explanation above has been on LO leakage, the fact that a quadrature error must give similar results at high power was first seen in simulations. It may nevertheless be of interest to seek intuitive support for the behaviour. The trajectory in modulation plane is generated from component functions envisioned along the I- and Q-axes.

A quadrature error is understood to mean that when mapping the component functions onto a plane, the coordinate axes are not orthogonal. If we assume that the I- component is aligned with an orthogonal coordinate system x,y, we can say that the Q- component has an angle $\Theta$ with the I-axis. The effect $\Theta$ not being 90° is that the circular indications of probability are reshaped to become ellipses. As every area element is reduced by cos $\Theta$ by this transformation, the probability density in every mapped point is inversely scaled.

A gain imbalance is understood to mean that the component functions are mapped with unequal gain. Again, let us assume that the I- component has unity gain, and assign a gain g to the Q-component. The circular shape once again is transformed to an ellipsis, the area elements are scaled by g, and the probability density is inversely scaled. Without loss of generality, we may assume that g<=1.

The intuitive result of this is that at low power levels we expect to see the scaling effects of probability densities, while at high power levels we will have a similar effect to that of LO leakage.

If all effects appear at the same time, the intuitive picture is that they are cumulative, seeing that gain imbalance and quadrature both tend to make the constellation more elliptic, while the LO leakage moves the distribution towards an increase of peak values. The expectation is that we may use the same measure to optimise all three parameters because the observation we choose gives a reliable improvement message for every component, keeping the others contributions constant.

### Detection of Imbalances

From the above discussion a possible detection mechanism evolves. From Fig. 4 one has seen that the amplitude distribution curve shape changed from curve A to curve B when imbalances of type (i), (ii) or (iii) were introduced. The main idea is to measure the area under the tail of these normalised envelope distribution curves. Here, the tail is defined by amplitudes above the point of intersection, X. Thus, a minimised area will be indicative of a "balanced" system.

With reference to Fig.4, we define the point of intersection, X, where the two curves A and B intersect. As this point depends on the actual distortion in the system, we define $V_{OPT}$ as the highest expected value of X. By deliberately varying the imbalance parameters, the inventors have found that $V_{OPT}$ lies approximately in the range 0.60-0.65. Evaluating the integral of the distribution curve from $V_{OPT}$ to 1 (i.e. to the uppermost point of the distribution, vhere $V_o=V_{o,max}$) thus gives an estimate of the degree of "imbalance" in the system.

Also, we denote p(v) as the probability density function in Fig. 4, and let N be a number of samples separated by T (seconds) defining an integration time and let e(t) designate the envelope of the RF signal
Now, let c(t) denote

$$\text{Equation 3} \qquad c(t) = \begin{cases} 1, & \text{if } e(t) \geq E_{Thresh} \\ 0, & \text{if } e(t) < E_{Thresh} \end{cases}$$

where $E_{Thresh}$ is the signal envelope detector output value when the normalised signal amplitude is $V_{OPT}$, It should be noted that the mathematical relation between $E_{Thresh}$ and $V_{OPT}$ is dependent on the characteristics of the envelope detector.

$$\text{Equation 4} \qquad E_C = \int_{V_{OPT}}^{1} p(v)dv = \left| \frac{1}{N} \sum_{n=1}^{N} c(nT) \right| \lim N \to \infty$$

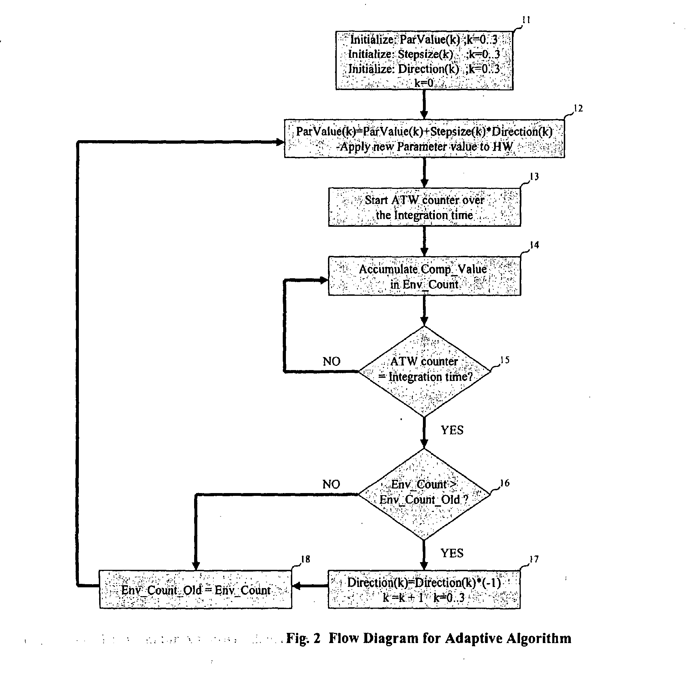

Hence $E_C$ will be a good measure for the wanted "tail area" ifN is made sufficiently large. The estimate for $E_C$ will in a practical implementation be extracted from the envelope of the RF signal. Feeding the envelope to a comparator and setting the reference to $E_{Thresh}$ will give us the desired c(t). This two state signal (i.e. c(t) ) can then be sampled and accumulated according to Eq. 4. The solution to the imbalance problem is then reduced to the task of minimising $E_C$ with respect to (i), (ii) and (iii). This can be done by varying the three imbalance parameters and measure the corresponding change in $E_C$. A possible process for this is shown in Fig. 2. An alternative process may be employed with the same detector solution, however, giving a different response pattern. The essential part, though, is to use the detector output information in a valid manner.

The approach suggested above counts occurrences of amplitudes above a certain level.An equivalent method would be to count occurences below a certain level, but then the count should be maximised instead of minimised. This is a special case of the more general solution where amplitude occurrences within one ore more intervals are counted. In a such solution we will need more than a 1-bit ADC (comparator) to realise Equation 3.

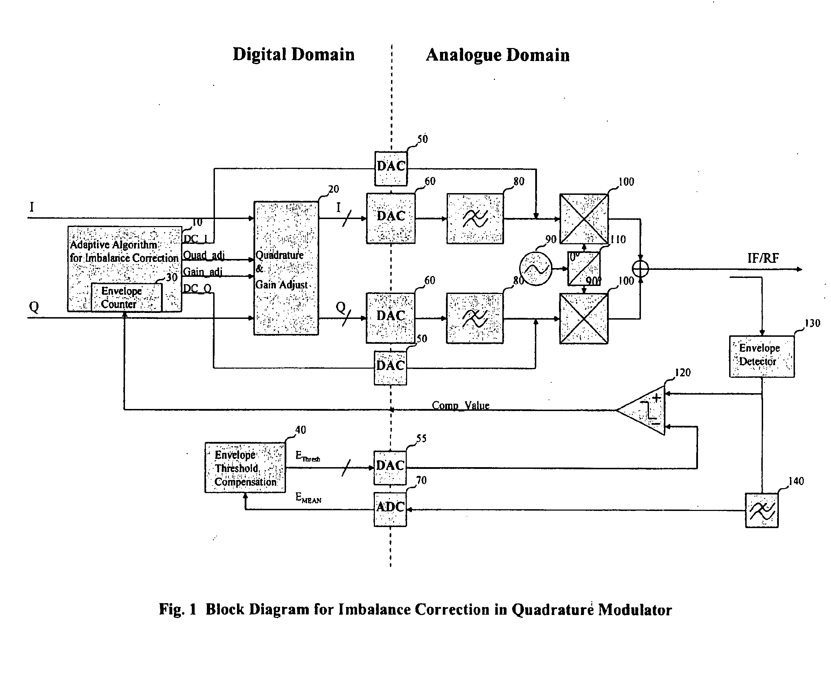

## Description of Block Diagram in Fig.1

Fig. 1 shows a simplified block diagram of a quadrature modulator with an exemplary embodiment of the invention.

I- and Q-data are entering the block with reference number **20**. This block performs a traditional quadrature adjustment by adding controlled cross talk of I onto Q and vice versa. Thereafter I- and Q-channel gain are scaled by a factor with opposite sign for I-and Q-channel. The magnitude of both quadrature and gain adjustment are output from **10.** I- and Q-data are further passed on to D/A converters **60** and the ordinary unwanted images from the conversion process are filtered in **80** before the signal is converted to RF or IF in **100**. The conversion stage is done in quadrature, meaning that the local oscillator signal from **90** is phase shifted in **110** so that the LO feeding the Q-channel mixer is 90° out of phase with respect to the LO feeding the I-channel mixer. A diode-based detector **130** will give us a squared estimate of the envelope, but as long as the response is monotonic this satisfies our needs. The output from **130** is split and one part led to a comparator **120**. Here the envelope is compared to a configurable threshold from **55**. This threshold can be thought of as a trigger on the envelope: If the instantaneous envelope value is above the trigger, a logical 1 is the output from **120**, otherwise a logical 0 is the output. This comparator value is sampled and accumulated in the digital domain in **30** according to Equation 4. After each NT second the adaptive process for imbalance correction **10** receives a new estimate for $E_C$ and outputs an adjustment. Block **10** has four outputs for adjustment of imbalance according to (i),(ii) and (iii), where the LO leakage occupies two of the outputs. DC_I and DC_Q are converted to analogue DC voltages at the output of **50** and applied as DC correction voltages at the input stage of **100**.

The other branch from the envelope detector **130** is low pass filtered in **140** and so that the mean value of the RF signal is extracted and sampled in **70**. This information is required in order to ensure that the $E_{Thresh}$ parameter approximately follows gain variations of the IF/RF signal. The $E_{Thresh}$ is continuously adjusted in the Envelope Threshold Compensation block **40**. Denote the output from **70** as $E_{MEAN}$. The output from 40 is in this case $E_{Thresh} = A \cdot E_{MEAN} +$

$C$, where A and C are configurable parameters. The inventors have found that good correspondence with Vopt is achieved by setting the value of A to about 4 dB. The optimum setting of A and C is reached when a gain difference at IF/RF has minimum impact on the estimate for $E_C$.

## Description of Flow Diagram for Adaptive Process in Fig.2

The flow diagram here described may be associated to Fig. 1 by block **10.** Each of the four parameter outputs from **10** have three associated properties:

1. ParValue(k), stores the current value for each parameter.
2. Stepsize(k), holds the amount of change when adjusting the parameter
3. Direction(k), defines the current direction for next adjustment of the parameter.
+1 indicates increased next adjustment of ParValue(k), while -1 indicates decreased next adjustment of ParValue(k).

In **11** the properties are initialised and the parameter selector k is set to 0. The four possible values of k are to be interpreted as:

k=0 :    DC_I is the current parameter
k=1 :    DC_Q is the current parameter
k=2 :    Quad_adj is the current parameter
k=3 :    Gain_adj is the current parameter

In **12** a new parameter value is computed and applied to the hardware. Then the accumulate time window counter ATW is started in **13** to keep track of the configurable integration time. The next step **14** samples and accumulates the comparator output according to Equation 4. The Env_Count variable is equivalent to $E_c$ except for the lack of normalisation. This accumulation is performed until the test in block **15** indicates that the ATW counter has reached the integration time NT. A comparison of the current Env_count against the stored Env_count from last iteration is performed in **16**. If the new estimate is greater than the old, we are obviously moving the parameter in the wrong direction and hence the direction property for this parameter is inverted in **17** so that the next time the parameter is tuned it will be in an opposite direction of the current one. In addition the adjustment of the parameter is temporarily stopped and the parameter selector k, increases by one, meaning that a different parameter will be tuned next time. **k** wraps around when it reaches 3. If the output from **15** is NO, the adjustment was successful and no change of direction or parameter is performed. The process ends up in **18** where the obtained estimate gets status as the old estimate. This means that the process has a memory of one envelope count estimate. The process then goes into an infinite loop back to **12**. In this way we cycle through the four parameters and perform an independent adjustment of each.
The described system can be improved by introducing a enable/disable signal for the Env_Count accumulation variable. The idea is to enable counting only when the modulation trajectory corresponds to certain transmitted symbol sequences, e.g. selected corner points when detecting quadrature error.
In addition, reduced variance of the adjustment parameter is obtained by defining ΔEnv_count = Env_count- Env_Count_Old. This delta information can be used to define a variable step size for the parameters. Another way to improve the variance is to have larger memory on the Env_Count variable.
The main principles of this invention could also be adopted by a demodulator, suffering from the same deficiencies as the described modulator.

## Claims

1. A method for optimising the performance of a vector modulation system arranged to output a complex signal, **characterized in that** said method comprises the steps of:

measuring (30, 120) an area under a tail of an amplitude probability density curve of said complex signal, wherein the tail is defined by amplitudes above the highest expected value of the point of intersection where the amplitude probability density curve generated in absence of modulation impairment intersects an amplitude probability distribution curve generated in the presence of modulation impairment, and adjusting (20) at least one modulation impairment factor in order to minimize said area.

2. The method of claim 1, wherein said modulation impairment factor is an LO carrier leakage, an I/Q orthogonality error or an I/Q gain imbalance.

**3.** An arrangement for optimising the performance of a vector modulation system arranged to output a complex signal, **characterized in that** said arrangement comprises means (30, 120) for measuring an area under a tail of an amplitude probability density curve of said complex signal, wherein the tail is defined by amplitudes above the highest expected value of the point of intersection where the amplitude probability density curve generated in absence of modulation impairment intersects an amplitude probability distribution curve generated in the presence of modulation impairment, and means (20) for adjusting at least one modulation impairment factor in order to minimize said area.

**4.** The arrangement of claim 3, wherein said modulation impairment factor is an LO carrier leakage, an I/Q orthogonality error or an I/Q gain imbalance.

**Patentansprüche**

**1.** Verfahren zur Optimierung der Leistung eines Vektormodulationssystems, das zur Ausgabe eines komplexen Signals eingerichtet ist,
**dadurch gekennzeichnet, dass** das Verfahren die folgenden Schritte umfasst:

Messen (30, 120) eines Bereichs unter einem Ausläufer einer Amplituden-Wahrscheinlichkeitsdichtekurve des komplexen Signals, wobei der Ausläufer durch Amplituden über dem höchsten erwarteten Wert des Schnittpunkts, wo die bei Nichtvorhandensein der Modulationsbeeinträchtigung generierte Amplituden-Wahrscheinlichkeitsdichtekurve eine beim Vorhandensein der Modulationsbeeinträchtigung generierte Amplituden-Wahrscheinlichkeitsverteilungskurve schneidet, definiert ist, und
Justierung (20) zumindest eines Modulationsbeeinträchtigungsfaktors zur Minimierung des Bereichs.

**2.** Verfahren nach Anspruch 1, wobei der Modulationsbeeinträchtigungsfaktor eine LO-Trägerleckage, ein I/Q-Orthogonalitätsfehler oder ein I/Q-Verstärkungsungleichgewicht ist.

**3.** Einrichtung zur Optimierung der Leistung eines Vektormodulationssystems, das zur Ausgabe eines komplexen Signals eingerichtet ist, **dadurch gekennzeichnet, dass** die Einrichtung Mittel (30, 120) zum Messen eines Bereichs unter einem Ausläufer einer Amplituden-Wahrscheinlichkeitsdichtekurve des komplexen Signals umfasst, wobei der Ausläufer durch Amplituden über dem höchsten erwarteten Wert des Schnittpunkts, wo die bei Nichtvorhandensein der Modulationsbeeinträchtigung generierte Amplituden-Wahrscheinlichkeitsdichtekurve eine beim Vorhandensein der Modulationsbeeinträchtigung generierte Amplituden-Wahrscheinlichkeitsverteilungskurve schneidet, definiert ist, und Mittel (20) zur Justierung zumindest eines Modulationsbeeinträchtigungsfaktors zur Minimierung des Bereichs umfasst.

**4.** Einrichtung nach Anspruch 3, wobei der Modulationsbeeinträchtigungsfaktor eine LO-Trägerleckage, ein I/Q-Orthogonalitätsfehler oder ein I/Q-Verstärkungsungleichgewicht ist.

**Revendications**

**1.** Procédé pour optimiser les performances d'un système de modulation vectorielle conçu pour délivrer en sortie un signal complexe, **caractérisé en ce que** ledit procédé comprend les étapes consistant à :

mesurer (30, 120) une aire sous la queue d'une courbe de densité de probabilité d'amplitude dudit signal complexe, dans lequel la queue est définie par des amplitudes supérieures à la valeur attendue la plus élevée du point d'intersection situé à l'endroit où la courbe de densité de probabilité d'amplitude générée en l'absence de dégradation de la modulation coupe une courbe de distribution de probabilité d'amplitude générée en présence d'une dégradation de la modulation, et ajuster (20) au moins un facteur de dégradation de la modulation afin de minimiser ladite aire.

**2.** Procédé selon la revendication 1, dans lequel ledit facteur de dégradation de la modulation est une fuite de porteuse d'un OL, une erreur d'orthogonalité I/Q et un déséquilibre de gain I/Q.

**3.** Dispositif destiné à optimiser les performances d'un système de modulation vectorielle conçu pour délivrer en sortie un signal complexe, **caractérisé en ce que** ledit dispositif comprend un moyen (30, 120) destiné à mesurer une aire sous la queue d'une courbe de densité de probabilité d'amplitude dudit signal complexe, dans lequel la queue est définie par des amplitudes supérieures à la valeur attendue la plus élevée du point d'intersection situé à l'endroit où la courbe de densité de probabilité d'amplitude générée en l'absence de dégradation de la modulation coupe une courbe de densité de probabilité d'amplitude générée en présence d'une dégradation de la modulation, et un moyen (20) destiné à ajuster au moins un facteur de dégradation de la modulation afin de minimiser ladite aire.

4. Dispositif selon la revendication 3, dans lequel ledit facteur de dégradation de la modulation est une fuite de porteuse d'un OL, une erreur d'orthogonalité I/Q ou un déséquilibre de gain I/Q.

Fig. 1 Block Diagram for Imbalance Correction in Quadrature Modulator

EP 1 511 264 B1

EP 1 511 264 B1

Initialize: ParValue(k) ;k=0..3
Initialize: Stepsize(k) ;k=0..3
Initialize: Direction(k) ;k=0..3
k=0

11

ParValue(k)=ParValue(k)+Stepsize(k)*Direction(k)
-Apply new Parameter value to HW

12

Start ATW counter over
the Integration time

13

Accumulate Comp_Value
in Env_Count

14

ATW counter
= Integration time?

15

NO

YES

Env_Count >
Env_Count_Old ?

16

NO

YES

Direction(k)=Direction(k)*(-1)
k=k+1 k=0..3

17

Env_Count_Old = Env_Count

18

Fig. 2 Flow Diagram for Adaptive Algorithm

Fig. 3 Modulation space, and LO leakage effect

Fig. 4 Amplitude Distribution

EP 1 511 264 B1

**EP 1 511 264 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0617532 A